# EUROPÄISCHE PATENTSCHRIFT

(11) **EP 3 681 774 B1**
(45) Veröffentlichungstag und Bekanntmachung des Hinweises auf die Patenterteilung: **07.09.2022**
(21) Anmeldenummer: 18742968.3
(22) Anmeldetag: 12.07.2018
(51) Int. Cl.: B60T 8/36

(54) **HYDRAULIKBLOCK FÜR EINE HYDRAULISCHE FREMDKRAFT-FAHRZEUGBREMSANLAGE**
HYDRAULIC BLOCK FOR A HYDRAULIC POWER BRAKE SYSTEM OF A VEHICLE
BLOC HYDRAULIQUE POUR UN SYSTÈME DE FREINAGE HYDRAULIQUE À ACTIONNEMENT PAR UNE FORCE EXTÉRIEURE D'UN VÉHICULE

(30) Priorität: 12.09.2017 DE 102017216001
(43) Veröffentlichungstag der Anmeldung: 22.07.2020
(73) Patentinhaber: Robert Bosch GmbH, 70442 Stuttgart (DE)
(72) Erfinder: TANDLER, Juergen, 87629 Fuessen (DE); MAYR, Matthias, 87549 Rettenberg (DE); WEH, Andreas, 87477 Sulzberg (DE)
(86) Internationale Anmeldenummer: PCT/EP2018/068874
(87) Internationale Veröffentlichungsnummer: WO 2019/052712

(56) Entgegenhaltungen:
- WO-A1-2017/137135
- DE-A1-102014 213 732
- DE-A1-102014 215 308
- DE-A1-102014 215 311

## Beschreibung

Die Erfindung betrifft einen Hydraulikblock für eine hydraulische Fremdkraft-Fahrzeugbremsanlage mit den Merkmalen des Oberbegriffs des Anspruchs 1.

### Stand der Technik

Die internationale Patentanmeldung WO 2013/023 953 A1 offenbart eine Bremsbetätigungseinheit für eine hydraulische Fremdkraft-Fahrzeugbremsanlage mit einem quaderförmigen Gehäuse, das eine Hauptbremszylinderbohrung, eine Fremdkraftzylinderbohrung, einen Anschluss für einen Bremsflüssigkeitsvorratsbehälter und eine Aufnahme für einen Pedalwegsimulator aufweist.

Die Offenlegungsschrift DE 10 2014 213 732 A1 offenbart einen flachen, quaderförmigen Hydraulikblock für eine hydraulische Fremdkraft-Fahrzeugbremsanlage mit zwei Sacklöchern als Anschlüsse für einen Bremsflüssigkeitsvorratsbehälter in einer oberen Querseite und zwei größeren Sacklöchern als Aufnahmen für zwei hydraulisch parallel geschaltete Pedalwegsimulatoren in einer gegenüberliegenden, unteren Querseite. Eine Hauptbremszylinderbohrung durchsetzt den Hydraulikblock parallel zu den beiden Querseiten und nahe der oberen Querseite mit den Anschlüssen für den Bremsflüssigkeitsvorratsbehälter. Eine Verbindungsbohrung, die an einem Grund eines der beiden Anschlüsse für den Bremsflüssigkeitsvorratsbehälter und sekantenförmig in die Hauptbremszylinderbohrung mündet, verbindet den Anschluss für den Bremsflüssigkeitsvorratsbehälter mit der Hauptbremszylinderbohrung. Ein Rücklauf von den Aufnahmen für die Pedalwegsimulatoren ist als mehrfach abgewinkelte Bohrung im Hydraulikblock ausgeführt, die radial in den einen Anschluss für den Bremsflüssigkeitsvorratsbehälter mündet.

Die Offenlegungsschrift DE 10 2014 215 311 A1 offenbart einen Pedalwegsimulator mit einem federbeaufschlagten Kolben, der in einem Zylinder axial verschieblich ist. Eine Anschlussbohrung zum Anschluss an einen Hauptbremszylinder mündet achsparallel in eine Stirnseite des Zylinders. Eine Rücklaufbohrung durchsetzt den Zylinder radial und kommuniziert durch eine Umfangstasche mit einer Rückseite des Kolbens, die sich über einen Teil eines Umfangs und einen Teil einer axialen Länge des Zylinders erstreckt.

### Offenbarung der Erfindung

Der erfindungsgemäße Hydraulikblock mit den Merkmalen des Anspruchs 1 ist für eine hydraulische Fremdkraft-Fahrzeugbremsanlage vorgesehen und weist einen Anschluss für einen Bremsflüssigkeitsvorratsbehälter, eine Hauptbremszylinderbohrung und eine Aufnahme für einen Pedalwegsimulator auf. Vorzugsweise weist der erfindungsgemäße Hydraulikblock weitere Aufnahmen und Bohrungen für weitere hydraulische Bauteile der Fahrzeugbremsanlage, wie beispielsweise Aufnahmen für Magnetventile einer Bremsdruckregelung für eine Fremdkraftbremsung und/oder einer Schlupfregelung, und Anschlüsse für Bremsleitungen, die zu hydraulischen Radbremsen führen, auf.

Der Anschluss für den Bremsflüssigkeitsvorratsbehälter ist insbesondere ein zylindrisches, eventuell durchmessergestuftes Sackloch, in das ein Anschlussnippel des Bremsflüssigkeitsvorratsbehälter gesteckt wird. Der Bremsflüssigkeitsvorratsbehälter ist beispielsweise ein druckloser Bremsflüssigkeitsvorratsbehälter, wie er von herkömmlichen Hauptbremszylindern bekannt ist, auf die er aufgesetzt wird bzw. ist.

Die Hauptbremszylinderbohrung ist ein insbesondere zylindrisches Durchgangsoder Sackloch im erfindungsgemäßen Hydraulikblock, das zur Aufnahme eines Hauptbremszylinders vorgesehen ist oder das den Hauptbremszylinder bildet, in den ein oder mehrere Hauptbremszylinderkolben axial verschieblich eingebracht werden. Vorzugsweise weist die Hauptbremszylinderbohrung Querschnitts- bzw. Durchmesserstufungen und/oder umlaufende Nuten auf.

Die Aufnahme für den Pedalwegsimulator ist ein insbesondere zylindrisches Durchgangs- oder Sackloch im erfindungsgemäßen Hydraulikblock, das zur Aufnahme eines Pedalwegsimulators vorgesehen ist. Der Pedalwegsimulator ist ein druckfester Hydrospeicher für Bremsflüssigkeit, der insbesondere federbeaufschlagt, luftdruckbeaufschlagt oder gasdruckbeaufschlagt ist. Das die Aufnahme für den Pedalwegsimulator bildende Loch im erfindungsgemäßen Hydraulikblock kann Teil des Pedalwegsimulators, beispielsweise ein Zylinder zur Aufnahme eines axial verschieblichen Simulatorkolbens sein. Es kann auch ein Zylinder oder sonstiger, insbesondere druckfester Behälter des Pedalwegsimulators in der Aufnahme des Hydraulikblocks angeordnet, beispielsweise eingepresst werden.

Der erfindungsgemäße Hydraulikblock weist einen Rücklauf für den Pedalwegsimulator auf, der den Anschluss für den Bremsflüssigkeitsvorratsbehälter, die Hauptbremszylinderbohrung und die Aufnahme für den Pedalwegsimulator verbindet. Der Rücklauf kommuniziert mit einer Rückseite eines Simulatorkolbens, das heißt mit der Seite eines Simulatorkolbens, die nicht mit dem Hauptbremszylinder kommuniziert. Allgemein kommuniziert der Rücklauf mit einem Innenraum des Pedalwegsimulators, dessen Volumen bei einer Betätigung eines Hauptbremszylinders verkleinert und aus dem bei Betätigung des Hauptbremszylinders Bremsflüssigkeit verdrängt wird. Die bei Betätigung des Hauptbremszylinders aus dem Pedalwegsimulator verdrängte Bremsflüssigkeit strömt durch den Rücklauf in den Bremsflüssigkeitsvorratsbehälter. Der Rücklauf ermöglicht ein geschlossenes System, das heißt die Rückseite des Pedalwegsimulators muss weder mit einer Umgebung kommunizieren noch ein kompressibles Medium enthalten.

Der Anschluss für den Bremsflüssigkeitsvorratsbehälter und die Aufnahme für den Pedalwegsimulator sind in einander gegenüberliegenden Flächen des Hydraulikblocks angeordnet. Die Aufnahme für den Pedalwegsimulator weist einen Hinterschnitt oder eine Nut auf, in die der Rücklauf des Pedalwegsimulators mündet.

Der Rücklauf des erfindungsgemäßen Hydraulikblocks weist (mindestens) drei Bohrungen auf, von denen zwei parallel zueinander und parallel zu der Aufnahme für den Pedalwegsimulator im Hydraulikblock angebracht sind und eine als Querbohrung die beiden parallelen Bohrungen verbindet. Eine der beiden parallelen Bohrungen kommuniziert mit der Aufnahme für den Pedalwegsimulator und die andere der beiden parallelen Bohrungen kommuniziert mit dem Anschluss für den Bremsflüssigkeitsvorratsbehälter. "Kommunizieren" bedeutet, dass die beiden parallelen Bohrungen unmittelbar in die Aufnahme für den Pedalwegsimulator bzw. in den Anschluss für den Bremsflüssigkeitsvorratsbehälter münden oder mittelbar durch eine oder auch mehrere weitere Bohrungen, Nuten oder dergleichen mit der Aufnahme für den Pedalwegsimulator bzw. dem Anschluss für den Bremsflüssigkeitsvorratsbehälter kommunizieren. Eine der drei Bohrungen des Rücklaufs, insbesondere die Querbohrung, kommuniziert mit der Hauptbremszylinderbohrung, indem sie beispielsweise die Hauptbremszylinderbohrung oder eine umlaufende Nut der Hauptbremszylinderbohrung schneidet oder die Hauptbremszylinderbohrung durchsetzt.

Die Erfindung ermöglicht einen Rücklauf des Pedalwegsimulators im Hydraulikblock mit niedrigem Strömungswiderstand.

Unter einer Bohrung im Sinne der Erfindung ist ein - insbesondere zylindrisches, auch querschnitts- bzw. durchmessergestuftes - Durchgangs- oder Sackloch unabhängig von der Art seiner Herstellung zu verstehen. Eine Bohrung im Sinne der Erfindung kann also auch anders als durch Bohren spanend oder spanlos hergestellt sein.

Die Unteransprüche haben vorteilhafte Ausgestaltungen und Weiterbildungen der im Anspruch 1 angegebenen Erfindung zum Gegenstand.

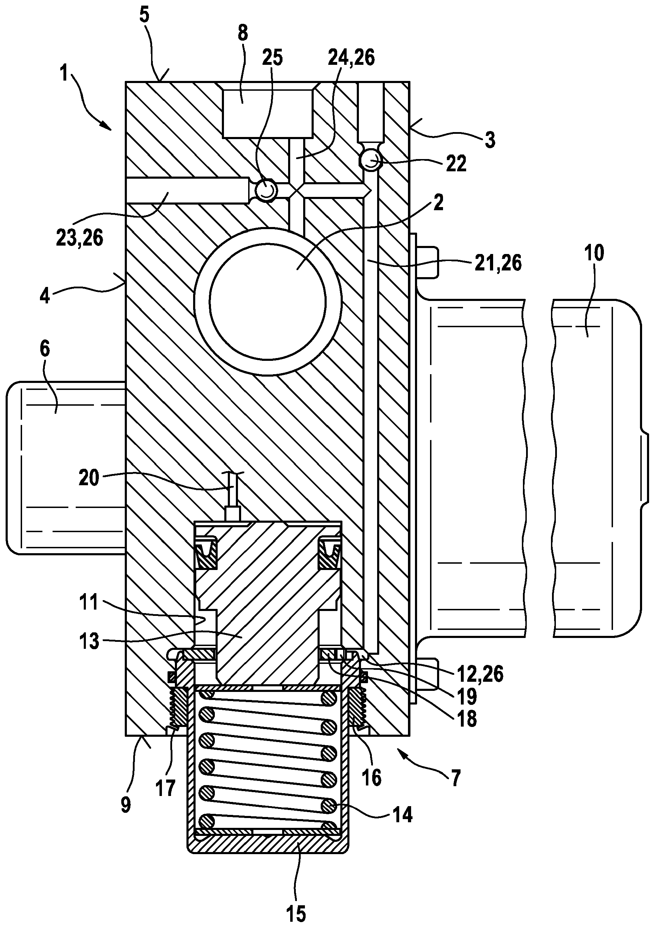

### Kurze Beschreibung der Zeichnung

Die Erfindung wird nachfolgend anhand einer in der Zeichnung dargestellten Ausführungsform näher erläutert. Die einzige Figur zeigt einen Querschnitt eines erfindungsgemäßen Hydraulikblocks einer hydraulischen Fremdkraft-Fahrzeugbremsanlage mit einer Schlupfregelung in einer Axialebene eines Pedalwegsimulators.

### Ausführungsform der Erfindung

Der in der Zeichnung dargestellte, erfindungsgemäße Hydraulikblock 1 ist für eine Bremsdruckregelung bei einer Fremdkraftbetätigung und für eine Schlupfregelung einer im Übrigen nicht dargestellten, hydraulischen Fremdkraft-Fahrzeugbremsanlage vorgesehen. Der Hydraulikblock 1 ist ein quaderförmiger Metallblock, der teilweise bestückt gezeichnet ist. In der gezeichneten und beschriebenen Ausführungsform besteht der Hydraulikblock 1 aus Leichtmetall, nämlich einer Aluminiumlegierung. Der Hydraulikblock 1 weist eine in der Zeichnung nicht sichtbare Verbohrung entsprechend eines hydraulischen Schaltplans der Fahrzeugbremsanlage auf. Die Verbohrung des Hydraulikblocks 1 ist kartesisch, d. h. Bohrungen sind parallel und/oder rechtwinklig zueinander und zu Außenflächen und Kanten des Hydraulikblocks 1 im Hydraulikblock 1 angebracht. Eine oder mehrere nicht kartesisch, sondern schräg im Hydraulikblock 1 angebrachte Bohrungen sind möglich. "Bohrungen" im Sinne der Erfindung können durch Bohren oder in anderer Weise spanend oder spanlos im Hydraulikblock 1 angebracht sein. Zu einem druckdichten Verschließen können Kugeln 22, 25 in Mündungen von Bohrungen an den Außenseiten des Hydraulikblocks 1 eingepresst sein.

Der Hydraulikblock 1 weist eine zylindrische Hauptbremszylinderbohrung 2 auf, die Durchmesserstufen und/oder umlaufende Nuten aufweisen kann. Die Hauptbremszylinderbohrung 2 ist in einer Mittelebene in einer Mitte zwischen zwei großen Außenseiten und nahe und parallel zu einer Querseite des Hydraulikblocks 1 angebracht. Die beiden großen Seiten des Hydraulikblocks 1 werden hier als Motorseite 3 und als Steuergerätseite 4 und die Querseite als Anschlussseite 5 bezeichnet werden. "Nahe" bedeutet einen Abstand von etwa dem 1- bis 1,5-fachen eines Durchmessers der Hauptbremszylinderbohrung 2 und weniger als einer Dicke des Hydraulikblocks 1. Die Hauptbremszylinderbohrung 2 bildet einen Hauptbremszylinder des Hydraulikblocks 1, in dem für eine Zweikreis-Fahrzeugbremsanlage zwei nicht gezeichnete Hauptbremszylinderkolben, nämlich ein so genannter Primär- oder Stangenkolben und ein sogenannter Sekundär- oder Schwimmkolben axial verschieblich angeordnet werden. Zu einer Betätigung des Hauptbremszylinders und der Fahrzeugbremsanlage wird der Primäroder Stangenkolben mit Muskelkraft über eine Kolbenstange und ein Fußbremspedal oder einen Handbremshebel in der Hauptbremszylinderbohrung 2 verschoben. Ein dadurch erzeugter Hauptbremszylinderdruck verschiebt den Sekundär- oder Schwimmkolben. Dies ist an sich bekannt und bedarf keiner weiteren Erläuterung.

Der Hydraulikblock 1 wird mit hydraulischen Bauelementen für eine Bremsdruckregelung bei einer Fremdkraftbremsung und der Schlupfregelung wie Magnetventilen, den Hauptbremszylinderkolben, einem Fremdkraftzylinder 6 und einem Pedalwegsimulator 7 bestückt, die durch die Verbohrung hydraulisch entsprechend dem hydraulischen Schaltplan der Fahrzeugbremsanlage verschaltet sind. Weil der Hauptbremszylinder in den Hydraulikblock 1 integriert ist, müssen über Bremsleitungen nur hydraulische Radbremsen an den Hydraulikblock 1 angeschlossen werden. Solche Hydraulikblöcke 1 sind bekannt und werden hier nicht weiter erläutert.

In der Anschlussseite 5 weist der Hydraulikblock 1 zylindrische Sacklöcher als Anschlüsse 8 für einen nicht dargestellten, drucklosen Bremsflüssigkeitsvorratsbehälter auf, wie er von herkömmlichen Hauptbremszylindern bekannt ist. Der Bremsflüssigkeitsvorratsbehälter weist Anschlussnippel auf, die mit Dichtringen abgedichtet in den Anschlüssen 8 stecken. Von einem Grund jedes der Anschlusses 8 für den Bremsflüssigkeitsvorratsbehälter führen Bohrungen 24 parallel zur Motorseite 3, zur Steuergerätseite 4 und zu Längsseiten des Hydraulikblocks 1 in die Hauptbremszylinderbohrung 2.

Der Hydraulikblock 1 weist ein zylindrisches Loch, das senkrecht zur Motorseite 3 und zur Steuergerätseite 4 durch den Hydraulikblock 1 durchgeht, als Fremdkraftzylinderbohrung auf. Die Fremdkraftzylinderbohrung befindet sich zwischen der Hauptbremszylinderbohrung 2 und einer der Anschlussseite 5 gegenüberliegenden Querseite 9 des Hydraulikblocks 1. In die Fremdkraftzylinderbohrung ist der Fremdkraftzylinder 6 eingepresst, der auf der Steuergerätseite 4 aus dem Hydraulikblock 1 vorsteht. An der Steuergerätseite 4 wird ein nicht gezeichnetes, elektronisches Steuergerät zur Regelung des Bremsdrucks bei einer Fremdkraftbremsung und zur Schlupfregelung angebracht. Außerdem stehen Ventildome der Magnetventile von der Steuergerätseite 4 des Hydraulikblocks 1 ab, wenn der Hydraulikblock 1 bestückt ist.

An der gegenüberliegenden Motorseite 3 ist ein Elektromotor 10 koaxial zur Fremdkraftzylinderbohrung am Hydraulikblock 1 angebracht, der über ein nicht sichtbares Planetengetriebe als Untersetzungsgetriebe und einen ebenfalls nicht sichtbaren Kugelgewindetrieb einen Fremdkraftkolben im Fremdkraftzylinder 6 verschiebt und dadurch einen Bremsdruck erzeugt.

In der der Anschlussseite 5 gegenüberliegenden Querseite 9 weist der Hydraulikblock 1 ein zylindrisches Sackloch als Aufnahme 11 für den Pedalwegsimulator 7 auf. Die Aufnahme 11 des Pedalwegsimulators 7 ist durchmessergestuft und weist eine umlaufende Nut 12 auf, die auch als Hinterschnitt der Aufnahme 11 des Pedalwegsimulators 7 aufgefasst werden kann. Die Aufnahme 11 bildet einen Zylinder des Pedalwegsimulators 7, in dem ein Simulatorkolben 13 axial verschieblich aufgenommen ist, der von einer Schraubenfeder als Simulatorfeder 14 in Richtung eines Grundes des die Aufnahme 11 und den Zylinder des Pedalwegsimulators 7 bildenden Sacklochs beaufschlagt wird. Die Simulatorfeder 14 stützt sich in einem napfförmigen Simulatordeckel 15 ab, der in die Aufnahme 11 des Pedalwegsimulators 7 eingesetzt ist und bis zu der umlaufenden Nut 12 reicht. Der Simulatordeckel 15 ist mit einem Gewindering 16 in der Aufnahme 11 des Pedalwegsimulators 7 gehalten, der nach Art einer Überwurfmutter in ein Innengewinde an einer Mündung der Aufnahme 11 eingeschraubt und mit einer Verstemmung 17 gegen Lösen gesichert ist. In der umlaufenden Nut 12 ist eine Lochscheibe 18 angeordnet, die einen Hub des Simulatorkolbens 13 begrenzt. Durch Ausnehmungen 19 in einem Außenrand der Lochscheibe 18 kommuniziert die den Zylinder des Pedalwegsimulators 7 bildende Aufnahme 11 mit der die Aufnahme 11 umschließenden und nach innen zur Aufnahme 11 offenen, umlaufenden Nut 12.

An einem Grund der den Zylinder des Pedalwegsimulators 7 bildenden Aufnahme 11 mündet eine Bohrung 20, die die Aufnahme 11 des Pedalwegsimulators 7 mit der Hauptbremszylinderbohrung 2 verbindet. In der Bohrung 20 ist ein in der Zeichnung nicht sichtbares Magnetventil als Simulatorventil angeordnet, dass bei einer Fremdkraftbremsung geöffnet wird, so das Bremsflüssigkeit aus dem Hauptbremszylinder in die den Zylinder bildende Aufnahme 11 des Pedalwegsimulators 7 verdrängt werden kann. Ein Bremsdruck bei einer Fremdkraftbremsung wird mit dem Elektromotor 10 im Fremdkraftzylinder 6 erzeugt. Durch die Bohrung 20 kommuniziert der Hauptbremszylinder mit einer dem Grund der Aufnahme 11 des Pedalwegsimulators 7 zugewandten Vorderseite des Simulatorkolbens 13, wogegen die die Aufnahme 11 des Pedalwegsimulators 7 umschließen die Nut 12 mit einer Rückseite des Simulatorkolbens 13 kommuniziert.

Von der umlaufenden Nut 12 der Aufnahme 11 des Pedalwegsimulators 7 führt eine Bohrung 21 achsparallel zur Aufnahme 11 des Pedalwegsimulators 7 und parallel zur Motorseite 3, zur Steuergerätseite 4 und zu den Längsseiten des Hydraulikblocks 1 zu der Anschlussseite 5, wo sie mit der eingepressten Kugel 22 druckdicht verschlossen ist. In der beschriebenen und dargestellten Ausführungsform der Erfindung verläuft die Bohrung 21 nahe der Motorseite 3 zwischen der Motorseite 3 und der Hauptbremszylinderbohrung 2 hindurch.

Zwischen dem Anschluss 8 für den Bremsflüssigkeitsvorratsbehälter in der Anschlussseite 5 des Hydraulikblocks 1 und der Hauptbremszylinderbohrung 2 mündet eine Querbohrung 23 in die von der Nut 12 der Aufnahme 11 des Pedalwegsimulators 7 kommende Bohrung 21. Die Querbohrung 23 ist senkrecht zur Motorseite 3 und zur Steuergerätseite 4 im Hydraulikblock 1 angebracht, kreuzt die Bohrung 24, die den Anschluss 8 für den Bremsflüssigkeitsvorratsbehälter mit der Hauptbremszylinderbohrung 2 verbindet, und ist durch die eingepresste Kugel 25 auf der Steuergerätseite 4 druckdicht verschlossen.

Wie die Bohrung 21 verläuft die Bohrung 24, die den Anschluss 8 mit der Hauptbremszylinderbohrung 2 verbindet, achsparallel zur Aufnahme 11 des Pedalwegsimulators 7 und parallel zur Motorseite 3, zur Steuergerätseite 4 und zu den Längsseiten des Hydraulikblocks 1. Diese beiden Bohrungen 21, 24 werden deswegen hier auch als parallele Bohrungen 21, 24 bezeichnet. Sie sind parallel zueinander versetzt. Die beiden parallelen Bohrungen 21, 24 sind Teil eines Rücklaufs 26 des Pedalwegsimulators 7, der die den Zylinder des Pedalwegsimulators 7 bildende Aufnahme 11 auf der Rückseite des Simulatorkolbens 13 mit dem Anschluss 8 des nicht gezeichneten, drucklosen Bremsflüssigkeitsvorratsbehälters verbindet. Außer den beiden parallelen Bohrungen 21, 24 gehören die Querbohrung 23 und die Nut 12 zum Rücklauf 26. Der Rücklauf 26 ermöglicht ein geschlossenes System.

## Patentansprüche

1. Hydraulikblock für eine hydraulische Fremdkraft-Fahrzeugbremsanlage, mit einem Anschluß (8) für einen Bremsflüssigkeitsvorratsbehälter, mit einer Hauptbremszylinderbohrung (2), mit einer Aufnahme (11) für einen Pedalwegsimulator (7), wobei der Anschluß (8) für den Bremsflüssigkeitsvorratsbehälter und die Aufnahme (11) für den Pedalwegsimulator (7) in gegenüberliegenden Flächen (5, 9) des Hydraulikblocks (1) angeordnet sind und wobei ein Rücklauf (26) des Pedalwegsimulators (7), der den Anschluß (8) für den Bremsflüssigkeitsvorratsbehälter, die Hauptbremszylinderbohrung (2) und die Aufnahme (11) für den Pedalwegsimulator (7) verbindet, zwei zueinander und zu der Aufnahme (11) für den Pedalwegsimulator (7) parallele Bohrungen (21, 24) im Hydraulikblock (1), deren eine mit der Aufnahme (11) für den Pedalwegsimulator (7) und deren andere mit dem Anschluß (8) für den Bremsflüssigkeitsvorratsbehälter kommuniziert, und eine die beiden parallelen Bohrungen (21, 24) verbindende Querbohrung (23) im Hydraulikblock (1) aufweist, **dadurch gekennzeichnet, dass** die Aufnahme (11) für den Pedalwegsimulator (7) einen Hinterschnitt oder eine Nut (12) aufweist, in den eine der beiden parallelen Bohrungen (21, 24) des Rücklaufs (26) mündet.

2. Hydraulikblock nach Anspruch **1,dadurch gekennzeichnet, dass** der Hydraulikblblock (1) ein kartesisch verbohrter Quader ist.

3. Hydraulikblock nach Anspruch 1, **dadurch gekennzeichnet, dass** die Hauptbremszylinderbohrung (2) quer zu der Aufnahme (11) für den Pedalwegsimulator (7) und/oder zu dem Anschluss (8) für den Bremsflüssigkeitsvorratsbehälter verläuft.

4. Hydraulikblock nach Anspruch 1, **dadurch gekennzeichnet, dass** der Hydraulikblock (1) Aufnahmen für Magnetventile und andere hydraulische Bauelemente einer Bremsregelung und/oder einer Schlupfregelung der Fahrzeugbremsanlage aufweist.

5. Hydraulikblock nach Anspruch 1, **dadurch gekennzeichnet, dass** der Hydraulikblock (1) eine Fremdkraftzylinderbohrung aufweist.

## Claims

1. Hydraulic block for a hydraulic power-assisted vehicle brake system, having a connector (8) for a brake fluid reservoir, having a master cylinder bore (2), having a receptacle (11) for a pedal travel simulator (7), wherein the connector (8) for the brake fluid reservoir and the receptacle (11) for the pedal travel simulator (7) are disposed in mutually opposite faces (5, 9) of the hydraulic block (1), and wherein a return line (26) of the pedal travel simulator (7) that connects the connector (8) for the brake fluid reservoir, the master brake cylinder bore (2) and the receptacle (11) for the pedal travel simulator (7) in the hydraulic block (1) has two bores (21, 24), said two bores (21, 24) being mutually parallel and parallel to the receptacle (11) for the pedal travel simulator (7), one of said bores (21, 24) communicating with the receptacle (11) for the pedal travel simulator (7), and the other of said bores (21, 24) communicating with the connector (8) for the brake fluid reservoir, and in the hydraulic block (1) has a transverse bore (23) that connects the two parallel bores (21, 24), **characterized in that** the receptacle (11) for the pedal travel simulator (7) has an undercut or a groove (12) into which one of the two parallel bores (21, 24) of the return line (26) opens.

2. Hydraulic block according to Claim 1, **characterized in that** the hydraulic block (1) is a Cartesian-bored cuboid.

3. Hydraulic block according to Claim 1, **characterized in that** the master brake cylinder bore (2) runs transversely to the receptacle (11) for the pedal travel simulator (7) and/or to the connector (8) for the brake fluid reservoir.

4. Hydraulic block according to Claim 1, **characterized in that** the hydraulic block (1) has receptacles for solenoid valves and other hydraulic components of a brake control and/or a slip control of the vehicle brake system.

5. Hydraulic block according to Claim 1, **characterized in that** the hydraulic block (1) has a power-assisted cylinder bore.

## Revendications

1. Bloc hydraulique pour un système de freinage hydraulique de véhicule à force externe, comprenant un raccord (8) pour un réservoir de liquide de frein, comprenant un alésage de maître-cylindre de frein (2), comprenant un logement (11) pour un simulateur de course de pédale (7), le raccord (8) pour le réservoir de liquide de frein et le logement (11) pour le simulateur de course de pédale (7) étant agencés dans des surfaces opposées (5, 9) du bloc hydraulique (1) et un retour (26) du simulateur de course de pédale (7), qui relie le raccord (8) pour le réservoir de liquide de frein, l'alésage de maître-cylindre de frein (2) et le logement (11) pour le simulateur de course de pédale (7), présentant deux alésages (21, 24) dans le bloc hydraulique (1), parallèles l'un à l'autre et au logement (11) pour le simulateur de course de pédale (7), dont l'un communique avec le logement (11) pour le simulateur de course de pédale (7) et dont l'autre communique avec le raccord (8) pour le réservoir de liquide de frein, et un alésage transversal (23) dans le bloc hydraulique (1) reliant les deux alésages parallèles (21, 24), **caractérisé en ce que** le logement (11) pour le simulateur de course de pédale (7) présente une contre-dépouille ou une rainure (12) dans laquelle débouche l'un des deux alésages parallèles (21, 24) du retour (26) .

2. Bloc hydraulique selon la revendication 1, **caractérisé en ce que** le bloc hydraulique (1) est un parallélépipède cartésien percé.

3. Bloc hydraulique selon la revendication 1, **caractérisé en ce que** l'alésage de maître-cylindre de frein (2) est transversal au logement (11) pour le simulateur de course de pédale (7) et/ou au raccord (8) pour le réservoir de liquide de frein.

4. Bloc hydraulique selon la revendication 1, **caractérisé en ce que** le bloc hydraulique (1) présente des logements pour les électrovannes et d'autres éléments hydrauliques d'un dispositif de régulation du freinage et/ou d'un dispositif de régulation du glissement du système de freinage de véhicule.

5. Bloc hydraulique selon la revendication 1, **caractérisé en ce que** le bloc hydraulique (1) présente un alésage de cylindre à force externe.
